# EUROPÄISCHE PATENTSCHRIFT

(11) **EP 3 207 806 B1**
(45) Veröffentlichungstag und Bekanntmachung des Hinweises auf die Patenterteilung: **18.09.2024**
(21) Anmeldenummer: 17160818.5
(22) Anmeldetag: 24.01.2014
(51) Int. Cl.: A23G 1/00, A23G 1/06, A23N 12/10

(54) **VERFAHREN UND VORRICHTUNG ZUM TROCKNEN UND/ODER RÖSTEN EINES LEBENSMITTELS**
METHOD AND DEVICE FOR DRYING AND/OR ROASTING A FOOD
PROCÉDÉ ET DISPOSITIF DESTINÉS AU SÉCHAGE ET/OU AU GRILLAGE D'UN ALIMENT

(30) Priorität: 25.01.2013 EP 13152759
(43) Veröffentlichungstag der Anmeldung: 23.08.2017
(62) Teilanmeldung aus: 14701525.9
(73) Patentinhaber: Bühler Barth GmbH, 71691 Freiberg (DE)
(72) Erfinder: VETTER, Karsten, 81375 München (DE); LOHMÜLLER, Tobias, 71688 Freiberg (DE)
(74) Vertreter: Vossius & Partner Patentanwälte Rechtsanwälte mbB

(56) Entgegenhaltungen:
- DE-A1- 3 436 334
- DE-U1- 202008 011 577
- US-A1- 2008 206 420
- WIESLAWA KRYSIAK ET AL: "Factors Affecting the Color of Roasted Cocoa Bean", JOURNAL OF FOOD QUALITY, vol. 36, no. 1, 10 January 2013 (2013-01-10), pages 21 - 31, XP055062977, ISSN: 0146-9428, DOI: 10.1111/jfq.12009
- DEUBLEIN D: "Kakaobohnen-Röstung: Verfahren im Vergleich", ZUCKER- UND SUESSWAREN WIRTSCHAFT, BECKMANN, LEHRTE, DE, vol. 47, no. 1/2, 1 January 1994 (1994-01-01), pages 11 - 12,14, XP008118545, ISSN: 0373-0204
- GARCIA-ALAMILLA ET AL: "Moisture, acidity and temperature evolution during cacao drying", JOURNAL OF FOOD ENGINEERING, BARKING, ESSEX, GB, vol. 79, no. 4, 15 November 2006 (2006-11-15), pages 1159 - 1165, XP005728365, ISSN: 0260-8774, DOI: 10.1016/J.JFOODENG.2006.04.005

## Beschreibung

Die Erfindung betrifft ein Verfahren und eine Vorrichtung für das Trocknen und/oder Rösten eines Lebensmittels in einer Behandlungseinrichtung gemäss dem Oberbegriff der unabhängigen Ansprüche.

Aus der EP 2 273 888 B1 ist ein Verfahren und eine Vorrichtung zum Trocknen und/oder Rösten von Kakaokernteilen bekannt. Gemäss der Offenbarung befinden sich die Kakaokernteile in einer von aussen beheizbaren Trommel, durch die zusätzlich ein erhitzter Reingasstrom geleitet wird für eine Wärmeübertragung durch Konvektion. Eine Temperatur oder auch ein Volumenstrom des erhitzten Reingasstroms sind steuerbar.

Dieser vorbekannte Stand der Technik weist den Nachteil auf, dass die Trocknung und/oder Röstung durch Schwankungen der Feuchtigkeit der zu trocknenden Kakaokernteile manchmal zu früh abgebrochen wird, so dass der Feuchtigkeitsgehalt am Ende des Verfahrens zu hoch sein kann und somit eine Weiterverarbeitung wie beispielsweise eine Vermahlung erschwert oder sogar unmöglich gemacht wird. Zudem kann der Nachteil auftreten, dass mit der konvektiven Trocknung und/oder Röstung der Kakaokernteile der Feuchtigkeitsgehalt zu stark und zu schnell verringert wird, so dass eine Fettmigration aus dem Inneren der Kakaokernteile auf die Oberfläche erfolgt, so dass sich dieses Fett in der Vorrichtung absetzt und die Vorrichtung verunreinigt; dies macht unter Umständen eine intensive Reinigung der Vorrichtung notwendig, die aufwendig und teuer ist. Eine schnelle Oberflächenabtrocknung der Kakaokernteile, auch Nibs genannt, kann zudem zu einem signifikant erhöhten Ertragsverlustes führen, da sich Teile der getrockneten Oberfläche lösen und ausgetragen werden. Die Trocknung muss daher kontrolliert werden, damit eine zu schnelle Trocknung der Oberfläche verhindert werden kann.

In der Veröffentlichung von Wieslawa Krysiak et al: "Factors Affecting the Color of Roasted Cocoa Bean", Journal of Food Quality, Bd. 36, Nr. 1, 10. Januar 2013, Seiten 21-31 wird der Einfluss von Luftparametern und Dauer der Röstung von Kakaobohnen auf den Grad der Bräunung analysiert.

Die US 2008/209420 A1 offenbart eine Heißluftfritteuse mit beschleunigtem Garen, die einen Garraum, eine Steuerung, eine Wärmequelle, eine Gebläseeinheit, Gasleitmittel und eine Entlüftungseinheit aufweist.

Es ist daher eine Aufgabe der vorliegenden Erfindung, die Nachteile des Bekannten zu vermeiden, insbesondere also ein Verfahren und eine Vorrichtung bereitzustellen, mit denen eine derartige Trocknung und/oder Röstung eines Lebensmittels ermöglicht wird, dass eine zuverlässigere und vereinfachte Weiterverarbeitung des Lebensmittels ermöglicht wird und dass ein Durchsatz an Lebensmittel durch die Vorrichtung verbessert wird unter anderem durch einen geringeren Reinigungsaufwand der Vorrichtung und eine Verringerung des Verlusts an Lebensmittel während des Verfahrens. Eine zusätzliche Aufgabe der vorliegenden Erfindung ist die Bereitstellung eines Verfahrens und einer Vorrichtung zum Trocknen und/oder Rösten eines Lebensmittels, mit dem die möglichst flexible Erzeugung von unterschiedlichen Geschmacksprofilen eines gerösteten Lebensmittels ermöglicht wird.

Diese Aufgaben werden durch ein Verfahren und eine Vorrichtung gemäss den unabhängigen Ansprüchen gelöst; die abhängigen Ansprüche beschreiben Ausführungsformen der Erfindung.

Das erfindungsgemässe Verfahren zum Trocknen und/oder Rösten eines Lebensmittels gemäß Anspruch 9 wird in einer Behandlungseinrichtung umfassend eine Behandlungskammer und zumindest eine Heizeinrichtung durchgeführt. Als Lebensmittel werden insbesondere Kakaobohnen und/oder Kakaokernteile verwendet. Das Verfahren umfasst den Schritt des Erhitzens eines ersten Gases mittels der Heizeinrichtung.

Als Gas kann ein Rauchgas/Zuluft-Gemisch verwendet werden.

Insbesondere wird als Gas Reinluft verwendet.

Unter dem Begriff "Reinluft" wird im Sinne der vorliegenden Anmeldung Luft ohne Rauchgas verstanden, welches beispielsweise beim Erhitzen der Luft in der Heizeinrichtung entstehen kann. erhitzte Reinluft kann beispielsweise in einer Heizeinrichtung, umfassend einen Verbrenner und einen separaten oder integrierten Wärmetauscher, erzeugt werden, wobei die Erhitzung der Reinluft im Wärmetauscher ohne direkten Kontakt mit Abgasen von dem Verbrenner erfolgt, sodass keine chemischen oder biochemischen Reaktionen mit Rauchgas ermöglicht sind.

Das erfindungsgemässe Verfahren umfasst ein Heizen einer Aussenseite der Behandlungskammer. Insbesondere erfolgt das Heizen der Aussenseite der Behandlungskammer mittels Zuführen eines Teils oder des gesamten erhitzten Gases. Es ist also denkbar, dass das Heizen der Aussenseite der Behandlungskammer mit einer separaten Heizung erfolgt und/oder mittels der Zuführung eines Teils oder des gesamten erhitzten Gases. Insbesondere erfolgt durch das Heizen der Aussenseite der Behandlungskammer eine Trocknung und/oder Röstung des Lebensmittels durch Konduktion von Wärme von der Aussenseite der Behandlungskammer in ein Inneres der Behandlungskammer, in dem das Lebensmittel angeordnet ist.

Bei dieser konduktiven Führung kann vorteilhafterweise ein Wärmekreislauf geschlossen werden, insbesondere kann Reinluft im Kreislauf geführt werden, was zu einem signifikant reduzierten Energieverbrauch führt.

Das erfindungsgemässe Verfahren umfasst das Durchführen von erhitztem Gas, insbesondere eines Teils oder des gesamten erhitzten ersten Gases durch die Behandlungskammer, wobei das Durchführen durch die Behandlungskammer vor dem Heizen, nach dem Heizen oder gleichzeitig mit dem Heizen der Aussenseite erfolgen kann. Beim Durchführen des erhitzten Gases durch die Behandlungskammer kann also eine Wärmeübertragung durch Konvektion von dem erhitzten Gas auf das in der Behandlungskammer sich befindende Lebensmittel erfolgen.

Das erfindungsgemässe Verfahren umfasst das Trocknen und/oder Rösten des Lebensmittels in der Behandlungskammer durch das Heizen und/oder mittels des durchgeführten erhitzten Gases. Mit anderen Worten erfolgt das Trocknen und/oder Rösten mittels Wärmeübertragung durch Wärmekonduktion von der geheizten Aussenseite der Behandlungskammer zu dem Lebensmittel und/oder mittels Wärmeübertragung durch Konvektion von dem durchgeführten erhitzten Gas auf das Lebensmittel.

Es ist selbstverständlich denkbar, ein Rauchgas zum Trocknen und/oder Rösten des Lebensmittels durch die Behandlungskammer zu führen und die Aussenseite der Behandlungskammer ebenfalls mit dem erhitzten Rauchgas zu heizen; dies hat den Vorteil, dass lediglich eine Heizeinrichtung notwendig ist zum Heizen der Aussenseite und für die Erhitzung des Gases zur Durchführung durch die Behandlungskammer, was konstruktiv einfacher und kostengünstig ist. Alternativ ist es denkbar, erhitztes Reingas durch die Behandlungskammer zu führen und die Aussenseite der Behandlungskammer mit dem erhitzten Rauchgas zu heizen. Zudem ist es denkbar, erhitztes Reingas durch die Behandlungskammer zu führen und die Aussenseite der Behandlungskammer ebenfalls mit dem erhitzten Reingas zu heizen, welches bevorzugt in einem Kreislauf geführt wird, um dadurch Energie zu sparen.

Das erfindungsgemässe Verfahren umfasst ein Ermitteln einer Kontrollgrösse, insbesondere der Feuchtigkeit des Lebensmittels oder einer Grösse, die Aufschluss über die Feuchtigkeit des Lebensmittels oder der Lebensmitteloberfläche gibt, in der Behandlungskammer während des Trocknens und/oder Röstens auf Basis eines Messwerts eines Sensors, insbesondere eines Feuchtigkeitssensors. Hierfür ist an und/oder in der Behandlungskammer ein Sensor, insbesondere ein Feuchtigkeitssensor, angeordnet. Ein Regeln des Heizens und/oder des Durchführens von erhitztem Gas erfolgt in Abhängigkeit von der ermittelten Kontrollgrösse, insbesondere der Feuchtigkeit.

Für das Regeln des Heizens und/oder des Durchführens von erhitztem Gas kann zum Beispiel die Temperatur des jeweiligen Gases und/oder die Menge des Gases eingestellt werden. Das konvektive Heizen kann auch insgesamt zu- oder weggeschaltet werden.

Ferner kann ein Verfahren zum Trocknen und/oder Rösten eines Lebensmittels, insbesondere von Kakaobohnen und/oder Kakaokernteilen, insbesondere wie oben beschrieben, in einer Behandlungseinrichtung erfolgen. Die Behandlungseinrichtung umfasst eine Behandlungskammer und zumindest eine Heizeinrichtung. Gas, insbesondere Reinluft, wird mittels der Heizeinrichtung erhitzt.

In der Behandlungskammer erfolgt ein Trocknen und/oder Rösten des Lebensmittels durch Heizen der Behandlungskammer, insbesondere von aussen, und/oder mittels durchgeführtem erhitzten Gas.

An und/oder in der Behandlungskammer ist mindestens ein Sensor angeordnet, wobei ein Ermitteln mindestens einer Kontrollgrösse in der Behandlungskammer während des Trocknens und/oder Röstens auf Basis eines Messwerts des Sensors erfolgt, und wobei ein Regeln des Heizens, des Durchführens von erhitztem Gas und/oder eines Wrasenabzugs in Abhängigkeit von der ermittelten Kontrollgrösse erfolgt. Bei mindestens einer Kontrollgrösse handelt es sich um eine Menge von aus der Behandlungskammer herausgeführtem Lebensmittelmaterial. Das herausgetragene Material wird mit einem Wrasenabzug, mit einem Gasabzug und/oder mit durchgeführtem Heizgas aus der Behandlungskammer ausgetragen.

Bei einem Verfahren zum Trocknen und/oder Rösten erfolgt in der Regel ein sogenannter Wrasenabzug, mit welchem die ausgetretene Feuchtigkeit und austretende Gase abgezogen werden und gegebenenfalls ein leichter Unterdruck in der Behandlungskammer erzeugt wird.

Das herausgeführte Lebensmittelmaterial besteht vorwiegend aus Produktkleinteilen, die entstehen, wenn die Oberfläche des Lebensmittels zu schnell und/oder zu stark erhitzt wird und sich daraufhin Teile von der Oberfläche des Lebensmittels lösen oder Lebensmittelteile zerbrechen oder zerrieben werden.

Bei dem Sensor handelt es sich bevorzugt um einen induktiven, optischen oder akustischen Sensor, mit dem Produktkleinteile detektiert werden.

In einer vorteilhaften Ausführung kann es sich bei der Kontrollgrösse um die Feuchtigkeit des Lebensmittels oder der Lebensmitteloberfläche, eine Sauerstoffmenge, eine Menge von aus der Behandlungskammer herausgeführtem Lebensmittelmaterial oder Kombinationen davon handeln.

Die gemessene Sauerstoffmenge und die Menge von aus der Behandlungskammer herausgeführtem Lebensmittelmaterial sind abhängig von dem Trocknungs- und/oder Röstgrad und stehen damit, wie eine gemessene Feuchtigkeit in der Behandlungskammer, in einer direkten Beziehung zu der Feuchtigkeit des Lebensmittels.

Bevorzugt erfolgt eine Feuchtigkeitsermittlung mittels eines Mikrowellensensors.

Vorteilhafterweise erfolgt das Regeln des Heizens über eine Einstellung der Gasführung durch das Gehäuse, insbesondere durch ein Festlegen von Bereichen des Gehäuses, die bevorzugt von Gas durchströmt werden.

Zur Einstellung der Gasführung kann beispielsweise mindestens eine Heissgaseintragsöffnung des Gehäuses und/oder mindestens eine Heissgasaustragsöffnung des Gehäuses geöffnet und/oder geschlossen werden.

Mit der Einstellung der Gasführung kann für das konduktive Heizen eine homogene Wärmeverteilung oder einen inhomogene Wärmeverteilung erreicht werden. Strömt das Gas gleichmässig um die ganze Behandlungskammer, wird eine homogene Beheizung durch Konduktion ermöglicht. Strömt das Gas nur an Teilen der Behandlungskammer vorbei, entsteht eine inhomogene Wärmeverteilung.

Zur Erreichung eines bestimmten Temperaturprofils sind an der Aussenseite der Behandlungskammer Leitelemente angebracht, die an den jeweiligen Abschnitten der Aussenseite der Behandlungskammer für eine längeren Verweilzeit des Gases sorgen. Bei einer gleichmässigen Anordnung von Leitblechen oder Lamellen kann insbesondere eine homogene Temperaturverteilung erreicht werden. Alternativ können die Leitelemente so angeordnet sein, dass bestimmte Abschnitte der Aussenseite der Behandlungskammer überhaupt nicht von Gas angeströmt werden, die daher kühler bleiben.

Bevorzugt sind die Leitbleche verstellbar, sodass die Gasführung über die Einstellung der Leitbleche einstellbar ist.

Innerhalb einer inhomogenen Wärmeverteilung kann das Lebensmittelprodukt von kälteren in wärmere Regionen der Behandlungskammer und umgekehrt überführt werden. Die jeweiligen Regionen können auch mehrfach durchlaufen werden. Dieser Prozess wird "Polycyclic Relaxation Process" (PRP) genannt. Der Transport des Lebensmittels innerhalb der Behandlungskammer wird durch ein entsprechendes Innendesign erreicht, beispielsweise durch ein Schneckenband, durch bevorzugt axial gelagerte Rühr- oder Verteilelemente oder durch Leitbleche.

Auf diese Weise wird ein für das Lebensmittelprodukt schonendes Verfahren ermöglicht, das zu einer gleichmässigeren Verteilung des Wassers im zu trocknenden und/oder zu röstenden Produkt führt und zu einer Reduzierung der Bildung von Kleinanteilen.

Das erfindungsgemässe Verfahren hat den Vorteil, dass durch die Ermittlung der Kontrollgrösse, insbesondere der Feuchtigkeit, während der Trocknung und/oder Röstung des Lebensmittels die Feuchtigkeit des Lebensmittels nach Abschluss des Verfahrens genau einstellbar ist. Hierdurch kann das behandelte Lebensmittel für die weiteren Verfahrensschritte wie beispielsweise eine Vermahlung in eine Kakaomühle optimiert werden. Zudem kann durch die Ermittlung der Feuchtigkeit während der Behandlung, das heisst dem Trocknen und/oder Rösten, vermieden werden, dass das Lebensmittel zu schnell getrocknet wird und beispielsweise Fett aus dem Inneren des Lebensmittels an die

Oberfläche gefördert und in der Behandlungskammer abgelagert wird, was eine gegebenenfalls aufwendige Reinigung nach sich ziehen kann. Alternativ oder zusätzlich kann vermieden werden, dass zu viele Produktkleinteile entstehen, die ausgetragen werden und den Ertrag vermindern. Zudem können vorteilhaft durch entsprechende Wahl zwischen konvektiver Wärmeübertragung, konduktiver Wärmeübertragung oder konduktiver und konvektiver Wärmeübertragung gewünschte Farb- und/oder Geschmacksprofile des behandelten Lebensmittels erreicht werden; dies ist beispielsweise durch eine entsprechende Wahl der Reihenfolge des Heizens der Aussenseite und des Durchführens des erhitzten Gases durch die Behandlungskammer möglich.

Das erfindungsgemässe Verfahren hat den weiteren Vorteil, dass kürzere Behandlungszeiten wie beispielsweise kürzere Röstzeiten durch eine schnellere Röstung des Lebensmittels mittels konvektiver Wärmeübertragung erreichbar sind; bei der Röstung von Kakaokernteilen nach dem erfindungsgemässen Verfahren ist eine Reduktion der Röstzeit um bis zu 60% erreichbar, was eine Kapazitätserhöhung bei gleichen Maschinenmassen um 150% bedeutet. Zudem kann vorteilhaft die Fettmigration aus dem Lebensmittel an die Oberfläche des Lebensmittels durch das erfindungsgemässe Verfahren im Wesentlichen vermieden werden; hierdurch reduziert sich ein Reinigungsaufwand der Behandlungseinrichtung, der durch Ablagerung von durch die Fettmigration auf die Oberfläche des Lebensmittels gefördertes Fett entstehen kann; zudem kann die Fettmigration zu einem Gewichtsverlust an behandeltem Lebensmittel führen; beispielsweise kann dies bei der Behandlung von Kakaokernteilen zu einem Gewichtsverlust von ca. 1% führen, weshalb eine Vermeidung der Fettmigration bei der Verarbeitung von üblicherweise mehreren Tausend Tonnen an Kakaokernteilen in der Behandlungseinrichtung pro Jahr zu signifikanten ökonomischen Vorteilen führen kann.

Die Regelung des Trocknungs- und/oder Röstverfahrens erfolgt bevorzugt durch ein rechtzeitiges Verringern der Hitzezufuhr, ein Umschalten auf rein konduktives Heizen, eine Reduktion des Produktabzuges, einen Abbruch des Heizens und/oder das rechtzeitige vollständige Entfernen des Lebensmittelproduktes aus der Behandlungskammer. Dadurch werden der Abrieb und die damit einhergehenden Kleinteilbildung verringert, die zu Ertragsminderung von einstelligen Prozentsätzen führen.

Insbesondere kann die Heizeinrichtung derart ausgestaltet sein, dass ein erster Volumenstrom an erhitztem Gas erzeugt wird, der zu der Aussenseite der Behandlungskammer geführt wird. Zudem kann die Heizeinrichtung so ausgestaltet sein, dass ein zweiter Volumenstrom an erhitztem Gas erzeugbar ist, wobei der zweite Volumenstrom durch die Behandlungskammer geführt wird. Alternativ ist es natürlich auch denkbar, dass nur ein Volumenstrom an erhitztem Gas erzeugt wird, der sequentiell oder parallel zur Aussenseite der Behandlungskammer und durch die Behandlungskammer geführt wird.

Bevorzugt ist in der Behandlungseinrichtung eine Volumenstromregeleinrichtung für den Volumenstrom von erhitztem Gas und/oder von in die Heizeinrichtung zugeführtem Gas angeordnet. Der Volumenstrom wird in Abhängigkeit von der ermittelten Kontrollgrösse, insbesondere der Feuchtigkeit, der Sauerstoffmenge, der Menge von aus der Behandlungskammer herausgeführtem Lebensmittelmaterial oder Kombinationen davon, geregelt.

Dies hat den Vorteil, dass durch die Regelung des Volumenstroms von durchgeführtem erhitztem Gas die konduktive und konvektive Wärmeübertragung auf das Lebensmittel regelbar ist zur weiter verbesserten Einstellung des zeitlichen Verlaufs der Feuchtigkeit des behandelten Lebensmittels.

Eine Regelung des Volumenstroms in Abhängigkeit von der gemessenen Kontrollgrösse kann dabei mittels eines im Querschnitt regelbaren Ventils oder aber auch durch Öffnen und Schliessen des Ventils in entsprechenden Zeitintervallen erfolgen. Es ist auch denkbar, eine Absaugeinrichtung wie beispielsweise einen Ventilator, insbesondere einen Wrasenventilator, zu verwenden mit regelbarer Saugleistung zur Regelung des Volumenstroms.

Alternativ ist beispielsweise auch eine Regelung einer Temperatur des erhitzten Gases denkbar, insbesondere in Abhängigkeit von der ermittelten Feuchtigkeit, um die Feuchtigkeit des Lebensmittels in Abhängigkeit von der Zeit gemäss den Anforderungen einzustellen.

Bevorzugt erfolgt die Regelung des Volumenstroms derart, dass eine maximale Strömungsgeschwindigkeit des erhitzten Gases an einem Auslass aus der Behandlungskammer kleiner als 25 m/s und bevorzugt kleiner als 20 m/s ist. Insbesondere wird die maximale Strömungsgeschwindigkeit zeitabhängig und/oder nach Prozessbedarf geregelt.

Dies hat den Vorteil, dass kleinere Teile des Lebensmittels im Wesentlichen nicht durch den durch die Behandlungskammer geführten Volumenstrom abgeführt werden; diese kleineren Teile sind beispielsweise bereits beim Einführen des Lebensmittels in die Behandlungskammer vorhanden oder entstehen durch den Behandlungsprozess in der Behandlungskammer. Da kleinere Teile, die durch den Volumenstrom abführbar wären, häufig Geschmacksträger des Lebensmittels sind, ist ein Abführen dieser kleineren Teile häufig unerwünscht. Zudem hat eine Abführung von kleineren Teilen durch den Volumenstrom den Nachteil, dass ein Verlust an Lebensmittel im grösseren Umfang auftreten kann, was ökonomisch nachteilig ist.

Insbesondere wird die maximale Strömungsgeschwindigkeit am Auslass der Behandlungskammer im Bereich von 2 m/s bis 20 m/s eingestellt. Weiter insbesondere wird die zeitabhängige Regelung der maximalen Strömungsgeschwindigkeit derart durchgeführt, dass die maximale Strömungsgeschwindigkeit während der Durchführung des Verfahrens abnimmt; dies hat den Vorteil, dass kleinere Teile durch den Volumenstrom nicht mitgerissen werden, obwohl durch die Trocknung und/oder Röstung die Feuchtigkeit und damit das spezifische Gewicht abnimmt; durch die Abnahme des spezifischen Gewichts könnten die kleineren Teile bei gleicher maximaler Strömungsgeschwindigkeit einfacher mitgerissen werden, was somit verhindert werden kann.

Der Volumenstrom kann auch auf ein Minimum gestellt werden, im Grenzfall ganz abgestellt werden, und die Beheizung auf konduktive Beheizung umgestellt werden.

Bevorzugt erfolgt die Regelung des Volumenstroms stromabwärts der Behandlungskammer. Dies hat den Vorteil, dass eine Regelung des Volumenstroms zuverlässiger erfolgen kann, da es sich bei Lebensmitteln oft um Produkte mit variabler Schüttgutdichte handelt, die somit dem durch die Behandlungskammer geführten Volumenstrom ein beispielsweise auch mit der Zeit sich ändernden Strömungswiderstand bieten, was mit einer Regelung des Volumenstroms stromabwärts der Behandlungskammer kompensiert werden kann.

Bevorzugt werden als Lebensmittel alkalisch vorbehandelte Kakaobohnen und/oder Kakaokernteile geröstet. Die vorbehandelten Kakaobohnen und/oder Kakaokernteile weisen insbesondere eine Anfangsfeuchtigkeit von grösser als 10 Gew.-% und insbesondere von grösser als 20 Gew.-% auf.

Bevorzugt weist das geröstete Lebensmittel eine Endfeuchtigkeit von kleiner als 3 Gew.-% und insbesondere kleiner als 2 Gew.-% auf.

Unter der Anfangsfeuchtigkeit wird im Sinne der vorliegenden Anmeldung die Feuchtigkeit des Lebensmittels verstanden, die dieses vor dem Beginn des Trocknens und/oder Röstens aufweist. Eine Endfeuchtigkeit im Sinne der vorliegenden Anmeldung ist die Feuchtigkeit, die das Lebensmittel nach Abschluss des Trocknens und/oder Röstens aufweist. Unter der Angabe der Feuchtigkeit in Gewichtsprozent wird im Sinne der vorliegenden Anmeldung ein Feuchtigkeitsgehalt bezogen auf das Trockengewicht des Lebensmittels verstanden.

Das Rösten des Lebensmittels und insbesondere von Kakaobohnen und/oder Kakaokernteilen auf eine Endfeuchtigkeit von kleiner als 3 Gew.-% hat den Vorteil, dass die gerösteten Kakaobohnen und/oder Kakaokernteile in einer Kakaomühle zuverlässig verarbeitbar sind.

Bevorzugt ist die Behandlungskammer drehbar gelagert. Alternativ oder zusätzlich ist in der Behandlungskammer ein Mischwerk angeordnet, wobei das Lebensmittel durch ein Drehen der Behandlungskammer und/oder eine Betätigung des Mischwerks umgewälzt wird.

Das Innendesign einer als Trommel ausgeführten Behandlungskammer unterstützt insbesondere das heterogene Beheizen, d.h. wenn eine Beheizung mit inhomogener Wärmeverteilung durchgeführt wird.

Das Design ist darauf ausgelegt, dass eine gezielte Durchmischung erfolgt, bei welcher das zu trocknende und/oder röstende Produkt wiederholt heissere und kältere Zonen durchquert (Polycyclic Relaxation Process [PRP]).

Auf diese Weise wird auch bei einer inhomogenen Beheizung eine schonende Behandlung, eine gleichmässige Verteilung des Wassers im zu trocknenden und/oder röstenden Produkt und eine reduzierte Bildung von Kleinanteilen erreicht, was den Ertragsverlust mindert und zu einer homogenen Geschmacks- und Farbbildung führt.

Das Innendesign der Behandlungskammer kann auch das Heizen mit homogener Wärmeverteilung unterstützen, wobei eine gleichmässigere Behandlung des Lebensmittels durch die Umwälzung erfolgen kann.

Die Drehbarkeit der Behandlungskammer und die gleichzeitige Anordnung eines Mischwerks in der Behandlungskammer erlaubt ein optimales Umwälzen des Lebensmittels in Abhängigkeit von dem Lebensmittel in der Behandlungskammer. Beispielsweise kann entsprechend dem Lebensmittel die Drehgeschwindigkeit der Behandlungskammer und/oder des Mischwerks angepasst werden.

Die Drehgeschwindigkeit kann so eingestellt werden, dass unterschiedliche Temperaturzonen optimal im Hinblick auf das Erreichen einer chemischen Reaktion, z.B. Oxidation, und/oder das Minimieren von Feinanteilerzeugung durchlaufen werden.

Insbesondere weist die Behandlungskammer, bevorzugt eine Trommel, einen Füllgrad bezogen auf das gesamte Volumen der Behandlungskammer im Bereich von 50% bis 80% und bevorzugt von 60% bis 70% auf.

Insbesondere weist eine Füllung der Behandlungskammer mit dem Lebensmittel ein Gewicht von zumindest 0.5 Tonnen und optional von zumindest 4 Tonnen auf.

Bevorzugt wird die Behandlungseinrichtung in einem Teilumluftbetrieb betrieben. Der Teilumluftbetrieb erfolgt insbesondere derart, dass zu der Aussenseite zugeführtes erhitztes Gas zumindest zu 50% und bevorzugt zumindest zu 70% in die Heizeinrichtung zurückgeführt wird. Bevorzugt wird dem zurückgeführten Gas frisches Gas beigemischt.

Dies hat den Vorteil, dass der Energiebedarf zum Heizen der Aussenseite verringert wird.

Gegebenenfalls weist die Behandlungseinrichtung eine Rückführeinrichtung zum Rückführen der Gase auf, wobei insbesondere in der Rückführeinrichtung ein Filter angeordnet, um mitgeführte Partikel und/oder Substanzen wie beispielsweise Fette oder Öle zu filtern, so dass diese im Wesentlichen nicht in die Heizeinrichtung zurückgeführt werden.

Bevorzugt erfolgt die Feuchtigkeitsermittlung mittels eines Mikrowellensensors. Derartige Mikrowellensensoren sind beispielsweise von der Firma TEWS Elektronik bekannt und können beispielsweise als Rohrsensoren, Planarsensoren oder auch Spaltsensoren ausgebildet sein.

Die Verwendung eines Mikrowellensensors hat den Vorteil, dass die Ermittlung der Feuchtigkeit des Lebensmittels in der Behandlungskammer zuverlässig und schnell erfolgen kann. Hierfür kann beispielsweise ein als Planarsensor ausgebildeter Mikrowellensensor verwendet werden, der in der Behandlungskammer angeordnet ist; durch die Drehung der Behandlungskammer, die insbesondere als Rösttrommel ausgestaltet ist, und/oder die Betätigung des Mischwerks kann im Betrieb während der Durchführung des Verfahrens zum Trocknen und/oder Rösten Lebensmittel über die Messoberfläche des Planarsensors gefördert werden und die Feuchtigkeit des Lebensmittels während der Behandlung ermittelt werden.

Bevorzugt umfasst die Behandlungseinrichtung eine Datenverarbeitungseinheit, in der Wertepaare von Röstgrad und Feuchtigkeit des Lebensmittels gespeichert sind.

Die Feuchtigkeit und/oder der Röstgrad können auch mittels einer Messung des Sauerstoffgehalts, der über einen entsprechenden Sensor als Kontrollgrösse oder kritischer Prozessparameter ermittelt wird, in der Behandlungskammer bestimmt werden. Insbesondere kann der Röstgrad mittels der Veränderung des Sauerstoffgehalts in der Behandlungskammer bestimmt werden. Das Ermitteln der Feuchtigkeit des Lebensmittels erfolgt über die Messung und insbesondere die Veränderung des Sauerstoffgehalts in der Behandlungskammer und die gespeicherten Wertepaare. Bevorzugt wird der Sauerstoffgehalt mittels einer Lambdasonde und besonders bevorzugt mittels einer zusätzlich in der Heizeinrichtung angeordneten zweiten Lambdasonde ermittelt.

Die Ermittlung der Feuchtigkeit des Lebensmittels über eine Messung des Sauerstoffgehalts, das heisst den Sauerstoffpartialdruck, hat den Vorteil, dass Lambdasonden in der Praxis zuverlässig und kostengünstig verfügbar sind. Derartige Lambdasonden sind beispielsweise als planare Breitband-Lambdasonde LSU 4.9 von der Firma Bosch erhältlich.

Beim Rösten eines Lebensmittels wie beispielsweise von Kakaobohnen und/oder von Kakaokernteilen findet eine Oxidation von Komponenten des Lebensmittels statt; diese Oxidation wird bei der Röstung von Kakao als Maillard-Reaktion bezeichnet. Durch die Oxidation beispielsweise von Kohlenstoff im Lebensmittel erfolgt eine Reduktion des Sauerstoffgehalts in der Behandlungskammer; mittels einer an und/oder in der Behandlungskammer angeordneten Lambdasonde ist die Abnahme des Sauerstoffgehalts und/oder die Veränderung des Sauerstoffgehalts in der Behandlungskammer während des Röstens messbar. Beispielsweise kann der Sauerstoffgehalt dadurch in der Behandlungskammer im Bereich von 0.2 % bis 0.8 % sinken; ein derartiges Absinken des Sauerstoffgehalts in der Behandlungskammer ist mit heute verfügbaren Lambdasonden messbar. Bevorzugt ist zusätzlich in der Heizeinrichtung eine zweite Lambdasonde angeordnet, um den Sauerstoffgehalt des in die Behandlungskammer zugeführten erhitzten Gases in der Heizeinrichtung zu bestimmen, um Schwankungen des Sauerstoffgehalts besser detektieren zu können; hierdurch wird die Genauigkeit der Messung des Sauerstoffgehalts in der Behandlungskammer weiter verbessert.

Ferner kann ein Verfahren zum Verifizieren einer erfolgten Sterilisation während eines Verfahrens zum Trocknen und/oder Rösten eines Lebensmittels, insbesondere wie oben beschrieben, in einer Behandlungseinrichtung umfassend ein Gehäuse, eine Behandlungskammer und zumindest eine Heizeinrichtung erfolgen, wobei zusätzliche Feuchtigkeit in die Behandlungskammer eingeführt wird und ein Sterilisationspeak in der Messkurve eines Feuchtigkeitssensors, insbesondere eines Mikrowellensensors, erfasst wird.

Die Messwerte des Feuchtigkeitssensors geben Auskunft darüber, ob hinzugefügte Feuchtigkeit tatsächlich in die Behandlungskammer gelangt. Dies konnte bislang nur auf indirektem Weg verifiziert werden, zum Beispiel über das Auftreten eines Druckanstiegs in einer Druckmessung.

Die Überwachung der abnehmenden Feuchtigkeit während des Trocknens und/oder Röstens eines Lebensmittels gibt einen Hinweis auf den geeigneten Zeitpunkt zum Einleiten zusätzlicher Feuchtigkeit, die für eine Sterilisation des Lebensmittels sorgt.

Nur wenn der Feuchtigkeitspeak in der Messkurve ersichtlich ist, ist die Feuchtigkeit tatsächlich in die Behandlungskammer und an das Produkt gelangt, womit ein positiver Nachweis für eine stattgefundene Sterilisation gegeben ist.

Vorteilhafterweise wird sichergestellt, dass genügend Feuchtigkeit in die Behandlungskammer gelangt ist, damit die gesamte Lebensmittelmenge dem Sterilisationsprozess unterzogen wird. Dazu wird die Fläche des Peaks in der Messkurve ermittelt, welche Aufschluss über die Feuchtigkeitsmenge in der Behandlungskammer gibt.

Ein weiterer Aspekt der vorliegenden Erfindung betrifft eine Behandlungseinrichtung zum Trocknen und/oder Rösten eines Lebensmittels. Insbesondere werden als Lebensmittel Kakaobohnen und/oder Kakaokernteile verwendet. Die Behandlungseinrichtung kann zur Durchführung eines Verfahrens wie oben beschrieben geeignet sein. Die Behandlungseinrichtung umfasst eine Behandlungskammer und zumindest eine Heizeinrichtung zum Erhitzen eines Gases. An und/oder in der Behandlungskammer ist ein Sensor, insbesondere ein Feuchtigkeitssensor, angeordnet zur Ermittlung einer Kontrollgrösse, insbesondere der Feuchtigkeit, des Lebensmittels in der Behandlungskammer während des Trocknens und/oder Röstens. Die Behandlungseinrichtung ist so ausgestaltet, dass ein Regeln des Trocknens und/oder Röstens in Abhängigkeit von der ermittelten Kontrollgrösse, insbesondere der Feuchtigkeit, durchführbar ist.

Vorzugsweise umfasst die Behandlungseinrichtung eine Einstelleinrichtung, mit welcher das Durchführen von erhitztem Gas durch die Behandlungskammer einstellbar ist, um ein konvektives Heizen zu erreichen.

Die erfindungsgemässe Vorrichtung ist geeignet zur Durchführung der erfindungsgemässen Verfahren und weist daher alle Vorteile der oben erläuterten Verfahren auf.

In einer vorteilhaften Ausführung kann es sich bei der Kontrollgrösse um die Feuchtigkeit des Lebensmittels oder der Lebensmitteloberfläche, eine Sauerstoffmenge, eine Menge von aus der Behandlungskammer herausgeführtem Lebensmittelmaterial oder Kombinationen davon handeln.

Insbesondere ist ein Sensor zum Ermitteln der Menge von aus der Behandlungskammer herausgeführtem Lebensmittelmaterial vorgesehen, insbesondere ein induktiver, ein optischer oder akustischer Sensor.

Bevorzugt ist Feuchtigkeitssensor vorgesehen, der als Mikrowellensensor ausgebildet ist. Dies hat den Vorteil, dass mittels des Mikrowellensensors eine Ermittlung der Feuchtigkeit des Lebensmittels im Inneren des Lebensmittels ermöglicht wird, was eine bessere Regelung des Verfahrens ermöglicht. Mit anderen Worten ist eine Tiefenmessung der Feuchtigkeit des Lebensmittels durchführbar und nicht nur eine Ermittlung der Oberflächenfeuchtigkeit; die Oberflächenfeuchtigkeit wird häufig mit beispielsweise Infrarotsensoren durchgeführt, wobei eine Ermittlung lediglich der Oberflächenfeuchtigkeit häufig zur Regelung des Verfahrens nicht ausreicht.

Die Behandlungsvorrichtung weist ausserdem eine Leitvorrichtung auf, mittels der das erhitzte Gas auf verschiedenen Wegen durch das Gehäuse führbar ist. Dazu weist das Gehäuse beispielsweise mindestens zwei verschliessbare Heissgaseintragsöffnungen und/oder mindestens zwei verschliessbare Heissgasaustragsöffnungen auf.

Es können, insbesondere bewegliche, Kompartimentwände vorgesehen sein, die das Einströmen des Heissgases nur in bestimmte abtrennbare Abschnitte des Gehäuses erlauben.

In einer Ausführungsform kann als Sensor ein Feuchtigkeitssensor vorgesehen sein, der bevorzugt als Lambdasonde ausgebildet ist, zur Messung des Sauerstoffgehalts in der Behandlungskammer. Insbesondere umfasst die Behandlungseinrichtung eine Datenverarbeitungseinheit, in der Wertepaare von Röstgrad und Feuchtigkeit des Lebensmittels gespeichert sind; der Röstgrad ist mittels einer Messung und insbesondere der Veränderung des Sauerstoffgehalts in der Behandlungskammer bestimmbar, wobei das Ermitteln der Feuchtigkeit des Lebensmittels über die Messung und insbesondere die Veränderung des Sauerstoffgehalts in der Behandlungskammer und die gespeicherten Wertepaare erfolgen kann.

Besonders bevorzugt sind in der Behandlungseinrichtung zumindest zwei Lambdasonden angeordnet, wobei eine zweite Lambdasonde der zwei Lambdasonden an und/oder in der Heizeinrichtung angeordnet ist zur Messung des Sauerstoffgehalts in der Heizeinrichtung.

Bevorzugt ist in der Behandlungseinrichtung eine Volumenstromregeleinrichtung für den Volumenstrom von erhitztem Gas und/oder von in die Heizeinrichtung zugeführtem Gas angeordnet. Der Volumenstrom ist in Abhängigkeit von der ermittelten Feuchtigkeit regelbar.

Besonders bevorzugt ist die Volumenstromregeleinrichtung stromabwärts der Behandlungskammer angeordnet.

Bevorzugt ist die Behandlungskammer drehbar gelagert. Alternativ oder zusätzlich ist in der Behandlungskammer ein Mischwerk angeordnet. Das Lebensmittel ist durch ein Drehen der Behandlungskammer und/oder eine Betätigung des Mischwerks umwälzbar. Insbesondere ist die Behandlungskammer als Trommel ausgebildet mit einer Trommelachse, um die die Trommel drehbar gelagert ist.

Bevorzugt umfasst die Behandlungseinrichtung eine Rückführeinrichtung zum Rückführen von zu der Aussenseite zugeführtem erhitztem Gas in die Heizeinrichtung. Die Behandlungseinrichtung ist derart ausgestaltet, dass ein Teilumluftbetrieb erfolgen kann, wobei bevorzugt dem zurückgeführten Gas frisches Gas beimischbar ist.

Ferner kann eine Behandlungseinrichtung zum Trocknen und/oder Rösten eines Lebensmittels bereitgestellt sein. Die Behandlungseinrichtung ist insbesondere wie die oben beschriebene Behandlungseinrichtung ausgebildet. Insbesondere ist die Behandlungseinrichtung geeignet zur Durchführung der oben beschriebenen Verfahren. Die Behandlungseinrichtung umfasst eine Behandlungskammer, die während des Betriebs mit dem Lebensmittel in Kontakt steht, und zumindest eine Heizeinrichtung zum Erhitzen eines Gases, wobei ein Abschnitt einer Aussenwand der Behandlungskammer eine Wärmeisolation aufweist. Die Wärmeisolation der Behandlungseinrichtung ist insbesondere als Doppelwand ausgebildet. Der Abschnitt umfassend die Wärmeisolation ist bevorzugt in dem Bereich der Aussenwand angeordnet, in dem die Zuführung des erhitzten Gases von der Heizeinrichtung zu der Aussenwand erfolgen kann. Mit anderen Worten weist nicht die gesamte Aussenwand die Wärmeisolation auf.

Dies hat den Vorteil, dass in dem Bereich, in dem das erhitzte Gas für das konduktive Heizen mit der Aussenwand der Behandlungskammer in Kontakt kommt, das Lebensmittel nicht zu stark erhitzt wird und ein Risiko für ein Anbacken von Lebensmittel in der Behandlungskammer verringert wird. Üblicherweise wird bei konduktiver Wärmeübertragung von der Aussenseite auf das Lebensmittel das erhitzte Gas in einem Abschnitt zu der Aussenwand der Behandlungskammer geführt und anschliessend entlang der Aussenwand gefördert, so dass die Behandlungskammer durch das erhitzte Gas umströmt wird. In dem Abschnitt, in dem das erhitzte Gas auf die Aussenwand trifft, kann daher eine zu starke Erhitzung der Aussenwand und damit des Lebensmittels in der Behandlungskammer erfolgen, was jedoch nachteilig für die Produktqualität und den Betrieb der Vorrichtung ist; gegebenenfalls können eine zu starke Röstung eines Teils des Produkts auftreten und zusätzliche Reinigungsschritte notwendig werden, wenn das Lebensmittel in der Behandlungskammer anbackt. Zudem weist die Anordnung der Wärmeisolation den Vorteil auf, dass eine gleichmässigere Wärmeverteilung entlang der Behandlungskammer gewährleistet werden kann, was eine Überröstung des Lebensmittels verhindern kann.

Unter einer Wärmeisolation in einem Abschnitt einer Aussenwand der Behandlungskammer wird im Sinne der vorliegenden Anmeldung verstanden, dass in dem Abschnitt der Wärmeleitungskoeffizient von der Aussenseite zur Innenseite der Behandlungskammer kleiner ist als ausserhalb des Abschnitts.

Ferner kann eine Behandlungseinrichtung zum Trocknen und/oder Rösten eines Lebensmittels bereitgestellt sein. Die Behandlungseinrichtung ist insbesondere wie die
oben beschriebene Behandlungseinrichtung ausgebildet. Insbesondere ist die Behandlungseinrichtung geeignet zur Durchführung der oben beschriebenen Verfahren. Die Behandlungseinrichtung umfasst eine Behandlungskammer, die während des Betriebs mit dem Lebensmittel in Kontakt steht, und zumindest eine Heizeinrichtung zum Erhitzen eines Gases. In der Behandlungseinrichtung sind Gasleitelemente vorgesehen, die sich insbesondere zumindest an einem Abschnitt einer Aussenwand der Behandlungskammer befinden.

Die Gasleitelemente begünstigen die Wärmeübertagung vom Heissgas auf die Behandlungskammer, indem sie die Verweilzeit des Heissgases in bestimmten Regionen und/oder die Oberfläche zum Wärmeübertrag erhöhen. Durch die vergrösserte Wärmeübertragung wird die Energiebilanz verbessert.

Als Gasleitelemente können beispielsweise Gasleitbleche oder Lamellen an der Aussenseite der Behandlungskammer vorgesehen sein oder Gaskanäle, die um die Behandlungskammer herumführen.

Die Gasleitelemente können so angeordnet sein, dass das Heissgas auf einen mäandernden Weg um die Behandlungskammer gezwungen wird, was die Zeit für den Wärmeübertrag signifikant verlängert.

Je nach Anordnung der Gasleitelemente wird eine homogenen Wärmeverteilung oder eine inhomogene Wärmeverteilung begünstigt.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: Schematische Darstellung einer erfindungsgemässen Behandlungseinrichtung in einer teilgeschnittenen Seitenansicht mit einer Volumenstromregeleinrichtung;
- Figur 2:: Schematische Darstellung einer alternativen erfindungsgemässen Behandlungseinrichtung in einer teilgeschnittenen Seitenansicht;
- Figur 3:: Schematische Darstellung einer weiteren alternativen erfindungsgemässen Behandlungseinrichtung mit einer Rückführeinrichtung;
- Figur 4:: Teilgeschnittene Seitenansicht einer erfindungsgemässen Behandlungskammer;
- Figur 5:: Schnittdarstellung der in Figur 4 dargestellten Behandlungskammer;
- Figur 6:: Schematische Darstellung einer alternativen erfindungsgemässen Behandlungseinrichtung mit je zwei Heissgaseintragsöffnungen und -austragsöffnungen in einer teilgeschnittenen Seitenansicht;
- Figur 7:: Teilgeschnittene Seitenansicht einer erfindungsgemässen Behandlungskammer mit Gasleitelementen;
- Figur 8:: Messkurve eines Mikrowellensensors während eines Verfahrens zum Trocknen und/oder Rösten eines Lebensmittelprodukts.

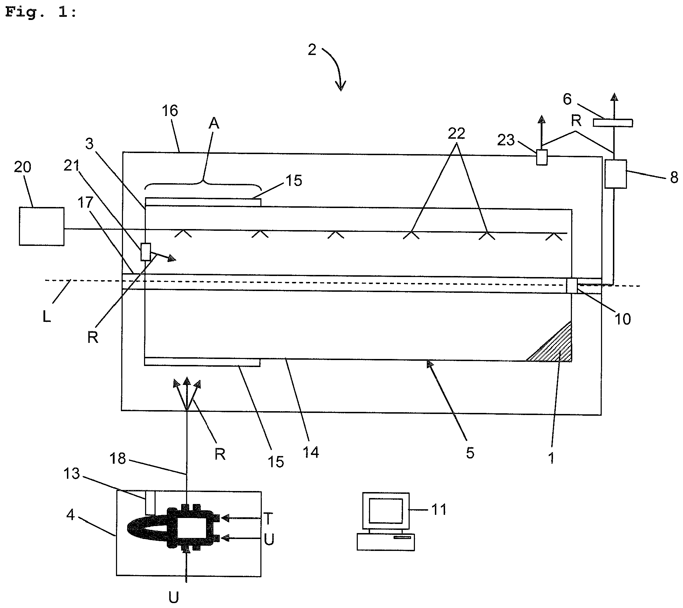

In Figur 1 ist in schematischer Darstellung eine erfindungsgemässe Behandlungseinrichtung 2 für das Trocknen und/oder Rösten von Kakaokernteilen 1 in einer teilgeschnittenen Seitenansicht dargestellt.

Die Behandlungseinrichtung 2 umfasst eine Behandlungskammer 3, welche in einem Gehäuse 16 angeordnet ist. Die Behandlungskammer 3 ist auf einer Welle 17 drehbar um eine Längsachse L der Welle 17 gelagert. Die Behandlungskammer 3 ist als Trommel ausgebildet.

Auf einer Aussenwand 14 ist in einem Abschnitt A eine als Doppelwand ausgebildete Wärmeisolation 15 angeordnet. Der Abschnitt A ist dabei der Bereich einer Aussenseite 5 der Behandlungskammer 3, in dem ein erhitztes Rauchgas R zu der Aussenseite 5 der Behandlungskammer 3 zugeführt wird. Das erhitzte Rauchgas R umspült die Behandlungskammer 3 und erhitzt dabei diese auf der Aussenseite 5, wobei die Aussenwand 14 erhitzt wird und mittels Konduktion die Kakaokernteile 1. Anschliessend kann das erhitzte Rauchgas R aus dem Gehäuseauslass 23 gefördert werden; hierzu kann in den Gehäuseauslass 23 oder in einer daran stromabwärts angeschlossenen Leitung ein Ventil und/oder eine Pumpe angeordnet sein zur Steuerung und/oder Regelung der Förderung des erhitzten Rauchgases R durch den Gehäuseauslass 23.

Die Behandlungskammer 3 weist an einer Stirnseite einen Einlass 21 für das erhitzte Rauchgas R in die Behandlungskammer 3 auf. Das erhitzte Rauchgas R wird dabei durch die Behandlungskammer 3 geleitet und durch einen Auslass 10 aus der Behandlungskammer 3 gefördert. Stromabwärts der Behandlungskammer 3 ist eine Volumenstromregeleinrichtung 8 angeordnet, bei der es sich beispielsweise um einen Wrasenventilator handeln kann. Mittels der Volumenstromregeleinrichtung 8 kann der Volumenstrom an erhitztem Rauchgas R durch die Behandlungskammer 3 geregelt werden. Die Regelung erfolgt dabei derart, dass eine maximale Geschwindigkeit des durch den Auslass 10 geförderten erhitzten Rauchgases R kleiner als 20 m/s ist.

In der Behandlungseinrichtung 2 ist eine Lambdasonde 6 angeordnet, mittels der ein Sauerstoffgehalt, das heisst ein Sauerstoffpartialdruck, messbar ist. Die Lambdasonde 6 ist mit einer Datenverarbeitungseinheit 11 verbunden. In der Datenverarbeitungseinheit 11 sind Wertepaare aus Sauerstoffgehalt und Röstgrad gespeichert, wobei sich aus dem Röstgrad ein Feuchtigkeitsgehalt der Kakaokernteile 1 ableiten lässt. Eine zweite Lambdasonde 13 ist in einer Heizeinrichtung 4 angeordnet, um Schwankungen im Sauerstoffgehalt, welche durch den Prozess der Erhitzung des Rauchgases R entstehen können, kompensieren zu können. Auch die zweite Lambdasonde 13 ist mit der Datenverarbeitungseinheit 11 verbunden.

Die Heizeinrichtung 4 umfasst die zweite Lambdasonde 13 sowie einen Feuerofen, der Umgebungsluft U erhitzen kann zur Erzeugung von erhitztem Rauchgas R. Das erhitzte Rauchgas R wird mittels einer Zufuhreinrichtung 18, die hier als Rohrleitung ausgebildet ist, zur Behandlungseinrichtung 2 gefördert.

Die Behandlungseinrichtung 2 umfasst zudem eine Beaufschlagungseinrichtung 20 zum Beaufschlagen der Kakaokernteile 1 mit beispielsweise Wasser, Dampf, Luft oder auch einer Lösung, die beispielsweise alkalisch sein kann. Hierzu ist eine Leitung umfassend Düsen 22 mit der Beaufschlagungseinrichtung 20 verbunden zur entsprechenden Beaufschlagung der Kakaokernteile 1. Eine derartige Behandlung kann beispielsweise vor oder auch nach dem Trocknen und/oder Rösten der Kakaokernteile erfolgen.

Eine Zuführung der Kakaokernteile 1 in die Behandlungskammer 3 kann über den Auslass 10 erfolgen, über den erhitztes Gas im Betrieb abführbar ist.

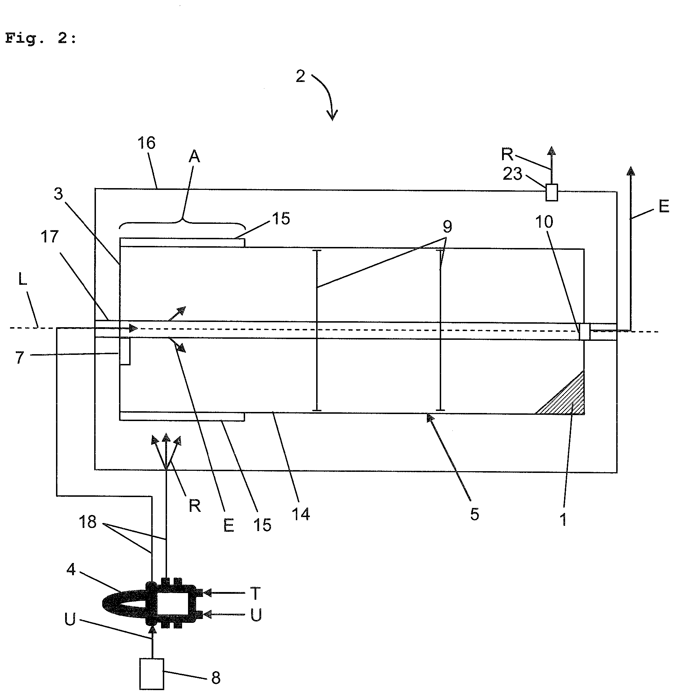

In Figur 2 ist in schematischer Darstellung eine alternative erfindungsgemässe Behandlungseinrichtung 2 in einer teilgeschnittenen Seitenansicht dargestellt.

Gleiche Referenzzeichen bezeichnen analoge Merkmale in allen Figuren und werden deshalb nur bei Bedarf erneut erläutert.

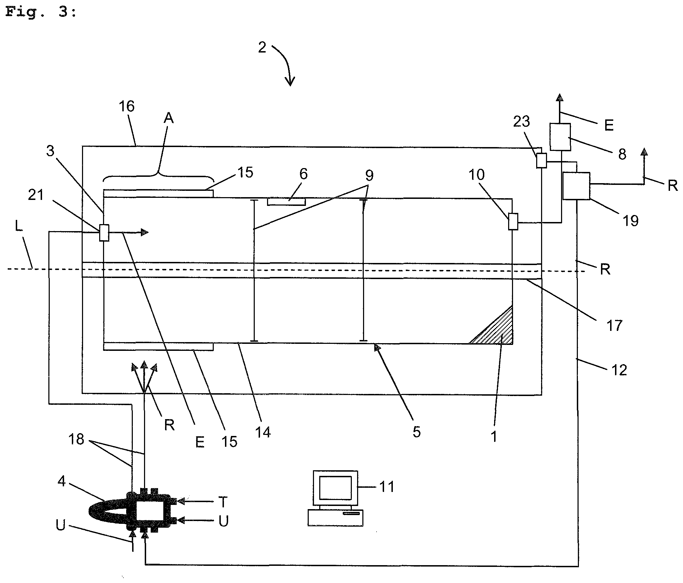

Im Unterschied zur Behandlungseinrichtung gemäss Figur 1 weist die Behandlungseinrichtung gemäss Figur 3 getrennte Zufuhrkanäle der Zufuhreinrichtung 18 für erhitztes Rauchgas R und erhitztes Reingas E auf. In der Heizeinrichtung 4 wird ein Treibstoff T mit Umgebungsluft U verbrannt zur Erzeugung eines erhitzten Rauchgases R. Das erhitzte Rauchgas R wird durch die Zufuhreinrichtung 18 direkt in das Gehäuse 16 zur Aussenseite 5 der Behandlungskammer 3 gefördert, um diese zu erhitzen. Zudem ist in der Heizeinrichtung 4 ein Wärmetauscher angeordnet zur Aufheizung von Umgebungsluft U zur Erzeugung von erhitztem Reingas E. Das Rauchgas steht somit mit dem erhitzten Reingas E nicht in Fluidverbindung, so dass das Rauchgas nicht in die Behandlungskammer 3 gefördert wird.

Zur Zuführung der Umgebungsluft U ist stromaufwärts der Heizeinrichtung 4 eine Volumenstromregeleinrichtung 8 angeordnet zum Fördern der Umgebungsluft U in die Heizeinrichtung 4.

Die Behandlungskammer 3 ist dabei so ausgestaltet, dass lediglich erhitztes Reingas E mittels der Zufuhreinrichtung 18 in die Behandlungskammer 3 förderbar ist. Die Behandlungskammer 3 weist eine geschlossene Seitenwand 14 auf, so dass das erhitzte Rauchgas R nicht in die Behandlungskammer 3 gelangen kann. Nach der Zuführung des Rauchgases R in das Gehäuse 16 wird das Rauchgas R durch den Gehäuseauslass 23 abgeführt, wobei auch hier stromabwärts des Gehäuseauslasses 23 eine Absaugeinrichtung für das Rauchgas R angeordnet sein kann, die hier nicht dargestellt ist.

In der Behandlungskammer 3 ist ein Mikrowellensensor 7 angeordnet zur Messung des Feuchtigkeitsgehalts der Kakaokernteile 1. In Abhängigkeit von der gemessenen Feuchtigkeit erfolgt eine Regelung des Volumenstroms von erhitztem Reingas E durch die Behandlungskammer 3 mittels der Volumenstromregeleinrichtung 8, die stromaufwärts der Behandlungskammer 3 angeordnet ist.

Zudem ist in der Behandlungskammer 3 ein Mischwerk 9 angeordnet zum Umwälzen der Kakaokernteile 1 während des Trocknens und/oder Röstens der Kakaokernteile 1. In der hier gezeigten Darstellung ist nur ein Teil des Mischwerks 9 dargestellt.

In Figur 3 ist in einer schematischen Darstellung eine weitere alternative erfindungsgemässe Behandlungseinrichtung 2 in einer teilgeschnittenen Seitenansicht dargestellt.

Die Zuführung von erhitztem Reingas E und erhitztem Rauchgas R in das Gehäuse 16 bzw. die Behandlungskammer 3 ist wie in Figur 2 dargestellt ausgebildet.

Im Unterschied zu Figur 2 weist die Behandlungseinrichtung 2 gemäss Figur 3 eine Lambdasonde 6 in der Behandlungskammer 3 auf zur Messung des Sauerstoffgehalts, aus dem mittels der in der Datenverarbeitungseinheit 11 gespeicherten Wertepaare zwischen Sauerstoffgehalt und Röstgrad der Feuchtigkeitsgehalt der Kakaokernteile 1 ermittelt wird. Das aus dem Gehäuse 16 abgeführte erhitzte Rauchgas R wird mittels einer Rückführeinrichtung 12 zur Heizeinrichtung 4 zurückgefördert. Stromabwärts des Auslasses 10 ist die Volumenstromregeleinrichtung 8 angeordnet zur Regelung des Volumenstroms an erhitztem Reingas E durch die Behandlungskammer 3 basierend auf der ermittelten Feuchtigkeit der Kakaokernteile 1.

Das erhitzte Rauchgas R wird zu einer Mischeinrichtung 19 gefördert, in der einstellbar ist, welcher Anteil des Rauchgases R zur Heizeinrichtung 4 rückgeführt wird und welcher Anteil aus der Behandlungseinrichtung 2 gefördert wird. Die Mischeinrichtung 19 ist mit der Datenverarbeitungseinheit 11 verbunden, um die Menge an rückgeführtem Rauchgas R in die Heizeinrichtung 4 zu steuern und/oder zu regeln.

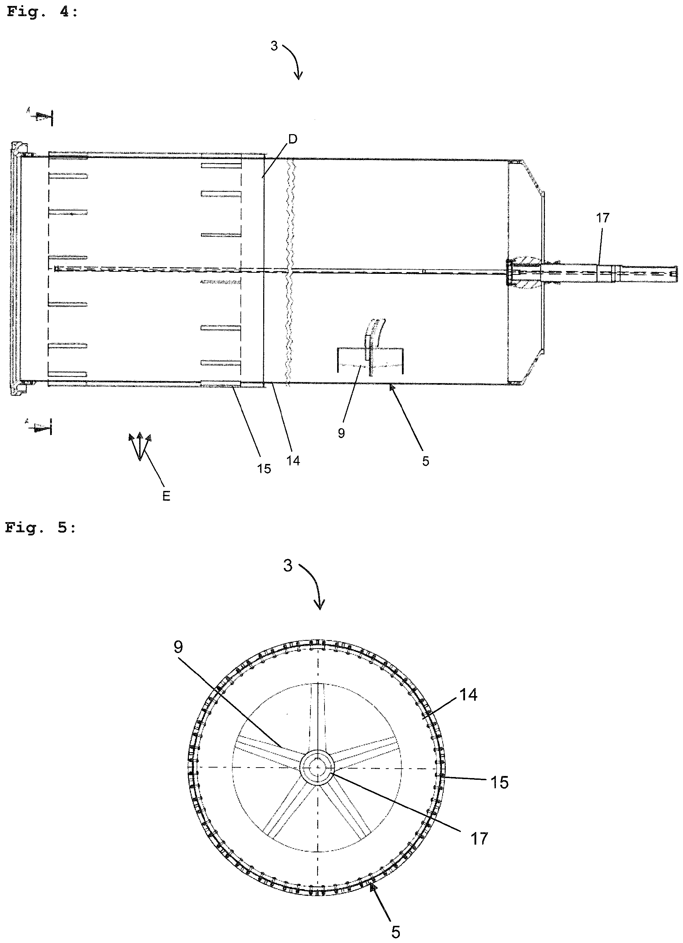

In Figur 4 ist eine erfindungsgemässe Behandlungskammer 3 in einer teilgeschnittenen Seitenansicht dargestellt. In einem Abschnitt weist die Aussenwand 14 der Behandlungskammer 3 die Wärmeisolation 15 auf, die als Doppelwand ausgebildet ist und einen Durchmesser D = 1,8 m aufweist. Das Mischwerk 9 ist nur schematisch dargestellt.

In Figur 5 ist ein Schnitt entlang der Ebene AA gemäss Figur 4 dargestellt. In der Schnittdarstellung sind ein Teil des Mischwerks 9 sowie die Wärmeisolation 15 dargestellt, die als Wand auf der Aussenwand 14 angeordnet ist zur Bildung einer Doppelwand auf der Aussenseite 5 der Behandlungskammer 3.

### Beispielrezepte für das Rösten von Kakaokernteilen

Im Folgenden werden verschiedene Beispiele von Röstprozessen für Kakaokernteile offenbart. Der Prozessschritt "konvektiv" bedeutet dabei die Durchleitung von erhitztem Gas durch die Behandlungskammer. Der Prozessschritt "konduktiv" bedeutet eine Heizung der Aussenseite der Behandlungskammer mit einem erhitzten Gas.

Die angegebenen Temperaturen sind die in der Heizeinrichtung gemessenen Temperaturen. Die Zielgrösse ist die zu erreichende Feuchtigkeit und/oder Temperatur des Lebensmittels.

Beispiel 1: Reduzierung der Röstzeit durch Austragen der Feuchtigkeit aus den Kakaokernteilen mittels Konvektion. Das Durchführen des erhitzten Gases durch die Behandlungskammer wird nach Erreichen der Endfeuchtigkeit von 6 Gew.-% abgeschaltet. Anschliessend erfolgt ein konduktives Heizen der Aussenseite der Behandlungskammer, bis die Temperatur des Lebensmittels 135 °C beträgt.

| Prozessschritt | Temperatur [°C] | Zielgrösse |
|---|---|---|
| Konvektiv | 250-300 | Endfeuchtigkeit von 6% |
| Konduktiv | 680-750 | 130 bis 140 °C |

Beispiel 2: Verhindern des Ausölens von Kakaokernteilen.

| Prozessschritt | Temperatur [°C] | Zielgrösse |
|---|---|---|
| Konvektiv | 250-300 | Endfeuchtigkeit von 6% |
| Konduktiv | 680-750 | konduktive Heizung für 5 bis 20 min |
| Konvektiv | 250-300 | Endfeuchtigkeit von 3% |
| Konduktiv | 680-750 | Endfeuchtigkeit kleiner 1.8% |

Beispiel 3: Intensive Geschmacksentwicklung bei reduzierter Röstzeit.

| Prozessschritt | Temperatur [°C] | Zielgrösse |
|---|---|---|
| Konvektiv | 250-300 | Endfeuchtigkeit von 4% |
| Konduktiv | 680-750 | 115 bis 125 °C |
| Konduktiv | 580 | konduktive Heizung für 5 bis 15 min |

Beispiel 4: Glättung des Geschmacksprofiles zur Vermeidung zu intensiver Röstaromen.

| Prozessschritt | Temperatur [°C] | Zielgrösse |
|---|---|---|
| Konduktiv | 680-750 | 105 bis 115 °C |
| Konvektiv | 250-300 | 130°C oder Endfeuchtigkeit kleiner 1% |

Beispiel 5: Erzeugung stärkerer Röstnoten in den gerösteten Kakaokernteilen.

| Prozessschritt | Temperatur [°C] | Zielgrösse |
|---|---|---|
| Konduktiv | 680-750 | 105 bis 115°C |
| Konvektiv | 250-300 | Konvektive Heizung für 10 min oder Endfeuchtigkeit kleiner 1% |

Beispiel 6: Alternatives Verfahren zur Röstung von unbehandelten Kakaokernteilen zur Erzielung eines Röstaromas, wie dieses bei der Röstung ganzer Bohnen auftritt.

| Prozessschritt | Temperatur [°C] | Zielgrösse |
|---|---|---|
| Konvektiv | 250-300 | 115 bis 125 °C oder Endfeuchtigkeit kleiner 1% |

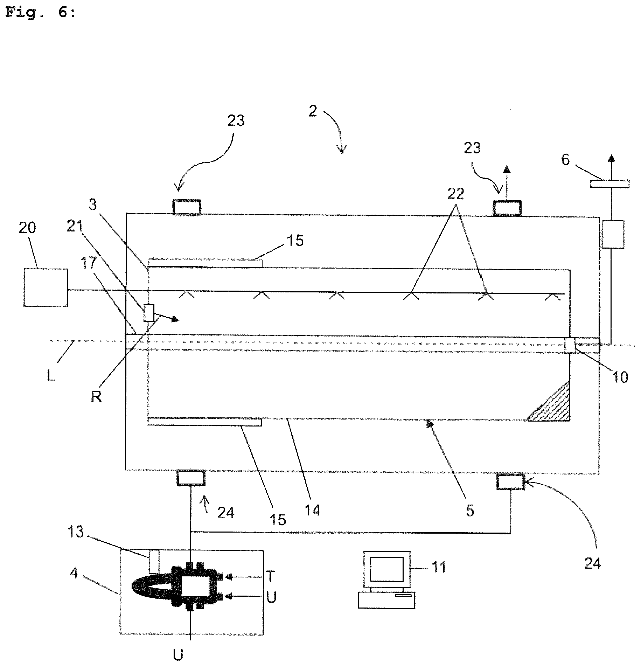

Figur 6 zeigt eine schematische Darstellung einer alternativen erfindungsgemässen Behandlungseinrichtung 2 mit je zwei Heissgaseintragsöffnungen 24 und Heissgasaustragsöffnungen 23.

Die Heissgaseintragsöffnungen 24 sind als Brennerklappen, die Heissgasaustragsöffnungen 23 als Abluftklappen ausgeführt.

Die Klappenstellung kann in einem Prozess auf verschiedene Weise geändert werden, wie nachfolgend anhand einiger Beispiele erläutert wird.

Beispiel 7: Das Produkt wird mit konduktivem Heizen getrocknet. Dies geschieht mit grossem Energieeintrag. Dazu sind beide Brennerklappen 24 und beide Abzugsklappen 23 geöffnet.

Sobald eine Kontrollgrösse, zum Beispiel Feuchtigkeit oder Sauerstoffgehalt, einen vorbestimmten Sollwert unter- oder überschreitet, wird auf Rösten umgestellt. Dazu wird die Behandlungskammer 3 schonend von Heissgas umströmt, beispielweise diagonal, wobei nur eine Brennerklappe 24 und eine schräg gegenüberliegende Abluftklappe 23 geöffnet sind.

Beispiel 8: Das Produkt wird mit konvektivem und konduktivem Heizen getrocknet. Dabei sind eine Brennerklappe 24 und eine diagonal gegenüberliegende Abzugsklappe 23 geöffnet.

Sobald eine Kontrollgrösse, zum Beispiel Feuchtigkeit, Sauerstoffgehalt oder Feinteilaustrag einen vorbestimmten Sollwert unter- oder überschreitet, wird auf Rösten umgestellt. Dazu wird auf rein konduktives Heizen umgestellt.

Beispiel 9: Das Produkt wird mit konduktivem Heizen getrocknet. Dies geschieht mit grossem Energieeintrag. Dazu sind beide Brennerklappen 24 und beide Abzugsklappen 23 geöffnet.

Sobald der Feinteilaustrag einen vorbestimmten Sollwert überschreitet, wird auf Rösten umgestellt. Dazu wird die Behandlungskammer 3 schonend von Heissgas umströmt, beispielweise diagonal, wobei nur eine Brennerklappe 24 und eine schräg gegenüberliegende Abluftklappe 23 geöffnet sind. Sollte der Feinteilaustrag trotzdem wieder einen kritischen Wert erreichen, so kann der Wrasenabzug reduziert werden.

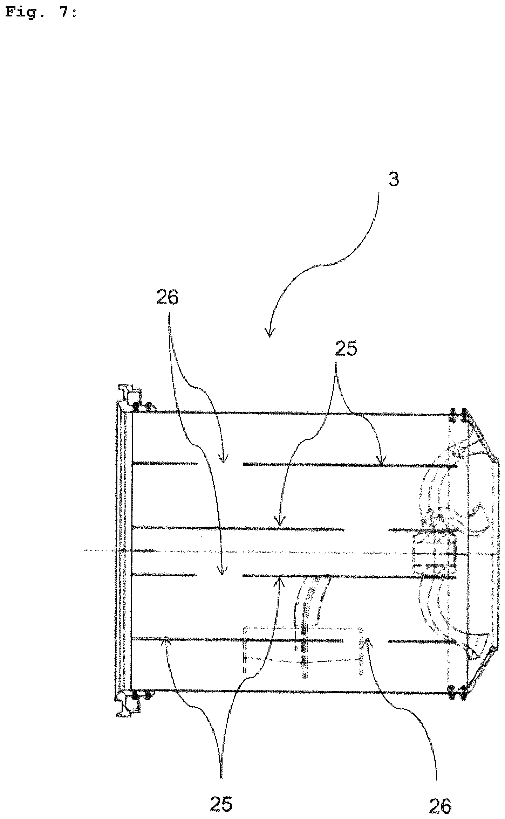

Figur 7 zeigt eine teilgeschnittene Seitenansicht einer erfindungsgemässen Behandlungskammer 3 mit Gasleitelementen 25. Die Gasleitelemente 25 sind in Form von Leitblechen an der Aussenseite 14 der Behandlungskammer 3 angebracht. Die Lücken 26 zwischen den Gasleitblechen 25 sorgen dafür, dass das Heissgas die Behandlungskammer 3 auf einem mäandernden Weg umströmt. Dadurch ist die Verweildauer des heissen Gases an der Behandlungskammer 3 grösser als bei einem direkten Weg des Gases zwischen hier nicht dargestellten Brennerklappen und Abluftklappen.

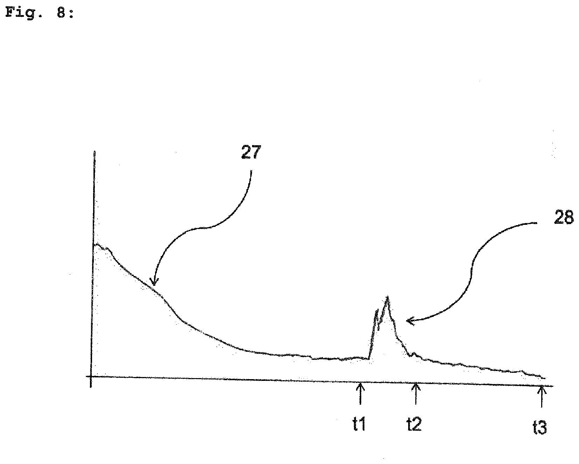

Figur 8 zeigt eine Messkurve 27 eines Mikrowellensensors 7 während eines Verfahrens zum Trocknen und/oder Rösten eines Lebensmittelprodukts, wobei das Messsignal über der Zeit aufgetragen ist. Der generelle abnehmende Verlauf der Messkurve 27 spiegelt die abnehmende Feuchtigkeit in der Behandlungskammer 3 wider.

Zu einem Zeitpunkt t1 wird durch die Beaufschlagungseinrichtung 20 Feuchtigkeit in die Behandlungskammer 3 geleitet. Anhand eines Peaks 28 in der Messkurve 27 kann unmittelbar erkannt werden, dass die Feuchtigkeit tatsächlich in der Behandlungskammer 3 ankommt und anhand der Fläche unter dem Peak 28 kann die Menge der eingetragenen Feuchtigkeit bestimmt werden.

Die Feuchtigkeit schlägt sich auf dem Produkt nieder und verdampft, was zu einer Sterilisierung führt, so dass der Peak in der Messkurve 27 wieder relaxiert und zu einem Zeitpunkt t2 keine überschüssige Feuchtigkeit mehr feststellbar ist.

Mit dem Auftreten eines Peaks 28 in der Messkurve 27 mit ausreichender Amplitude und /oder ausreichender umhüllter Fläche ist somit ein positiver Nachweis einer erfolgten Sterilisation gegeben.

Hat die Feuchtigkeit einen vorgegebenen Sollwert unterschritten, so kann der Prozess zu einem Zeitpunkt t3 beendet werden.

## Patentansprüche

1. Behandlungseinrichtung (2) zum Trocknen und/oder Rösten eines Lebensmittels, insbesondere von Kakaobohnen und/oder Kakaokernteilen (1), wobei die Behandlungseinrichtung (2)
ein Gehäuse (16),
eine innerhalb des Gehäuses (16) angeordnete Behandlungskammer (3), wobei die Behandlungskammer (3) insbesondere als Trommel ausgeführt ist, und
zumindest eine Heizeinrichtung (4) zum Erhitzen eines Gases umfasst,
**dadurch gekennzeichnet, dass**
an und/oder in der Behandlungskammer (3) mindestens ein Sensor, insbesondere ein Feuchtigkeitssensor, angeordnet ist zur Ermittlung einer Kontrollgröße, insbesondere der Feuchtigkeit des Lebensmittels in der Behandlungskammer (3), während des Trocknens und/oder Röstens,
derart dass ein Regeln des Trocknens und/oder Röstens in Abhängigkeit von der ermittelten Kontrollgröße, insbesondere der Feuchtigkeit, durchführbar ist, und
die Behandlungseinrichtung (2) eine, insbesondere verstellbare, Leitvorrichtung aufweist, mittels der das erhitzte Gas auf verschiedenen Wegen durch das Gehäuse (16) führbar ist, wobei die Leitvorrichtung Leitelemente umfasst, die sich außen an der Behandlungskammer (3) befinden, wobei die Leitelemente insbesondere Leitbleche oder Lamellen sein können, die an der Außenseite der Behandlungskammer (3) vorgesehen sind, oder Gaskanäle, die um die Behandlungskammer (3) herumführen,
wobei die Behandlungskammer (3) durch die Leitelemente von erhitztem Gas umströmt wird.

2. Behandlungseinrichtung (2) gemäß Anspruch 1, wobei es sich bei der Kontrollgröße um die Feuchtigkeit des Lebensmittels oder der Lebensmitteloberfläche, einer Sauerstoffmenge, einer Menge von aus der Behandlungskammer herausgeführtem Lebensmittelmaterial oder Kombinationen davon handelt und/oder an und/oder in der Behandlungskammer (3) ein Feuchtigkeitssensor angeordnet ist, der als Mikrowellensensor (7) ausgebildet ist und/oder in der Behandlungseinrichtung (2) zumindest zwei Lambdasonden (6, 13) angeordnet sind, wobei eine zweite Lambdasonde (13) der zwei Lambdasonden an und/oder in der Heizeinrichtung (4) angeordnet ist zur Messung des Sauerstoffgehalts in der Heizeinrichtung (4).

3. Behandlungseinrichtung (2) gemäß einem der Ansprüche 1 oder 2, wobei das Gehäuse mindestens zwei verschließbare Heißgaseintragsöffnungen und/oder mindestens zwei verschließbare Heißgasaustragsöffnungen aufweist.

4. Behandlungseinrichtung (2) gemäß einem der Ansprüche 1 bis 3, wobei der Sensor als Lambdasonde (6) ausgebildet ist zur Messung des Sauerstoffgehalts in der Behandlungskammer (3), wobei insbesondere die Behandlungseinrichtung (2) eine Datenverarbeitungseinheit (11) umfasst, in der Wertepaare von Röstgrad und Feuchtigkeit des Lebensmittels gespeichert sind, wobei der Röstgrad mittels einer Messung und insbesondere der Veränderung des Sauerstoffgehalts in der Behandlungskammer (3) bestimmbar ist, und wobei das Ermitteln der Feuchtigkeit des Lebensmittels über die Messung und insbesondere die Veränderung des Sauerstoffgehalts in der Behandlungskammer (3) und die gespeicherten Wertepaare erfolgen kann.

5. Behandlungseinrichtung (2) gemäß einem der Ansprüche 1 bis 4, wobei in der Behandlungseinrichtung (2) eine Volumenstromregeleinrichtung (8) für den Volumenstrom von erhitztem Gas und/oder von in die Heizeinrichtung (4) zugeführtem Gas angeordnet ist, wobei der Volumenstrom in Abhängigkeit von der ermittelten Feuchtigkeit regelbar ist.

6. Behandlungseinrichtung (2) gemäß einem der Ansprüche 1 bis 5, wobei die Leitvorrichtung derart einstellbar ist, dass das Gas gleichmäßig um die Behandlungskammer (3) strömt und so eine homogene Wärmeverteilung erreicht wird.

7. Behandlungseinrichtung (2) gemäß einem der Ansprüche 1 bis 5, wobei die Leitvorrichtung derart einstellbar ist, dass das Gas nur an Teilen der Behandlungskammer (3) vorbei strömt und so eine inhomogene Wärmeverteilung erreicht wird.

8. Behandlungseinrichtung (2) gemäß Anspruch 7, ferner mit einer Einrichtung zum Überführen des Lebensmittels von kälteren in wärmere Regionen der Behandlungskammer (3) und umgekehrt, beispielsweise durch ein Schneckenband, durch bevorzugt axial gelagerte Rühr- oder Verteilelemente oder durch Leitbleche.

9. Verfahren zum Trocknen und/oder Rösten eines Lebensmittels, insbesondere von Kakaobohnen und/oder Kakaokernteilen (1), in einer Behandlungseinrichtung (2) gemäß einem der vorstehenden Ansprüche, umfassend ein Gehäuse (16), eine Behandlungskammer (3), zumindest eine Heizeinrichtung (4) und eine, insbesondere verstellbare, Leitvorrichtung, mittels der das erhitzte Gas auf verschiedenen Wegen durch das Gehäuse (16) führbar ist, wobei das Verfahren die folgenden Schritte umfasst:
- Erhitzen eines ersten Gases, insbesondere Reinluft, mittels der Heizeinrichtung (4),
- Heizen, insbesondere mittels Zuführen eines Teils oder des gesamten erhitzten Gases, einer Außenseite (5) der Behandlungskammer (3),
- Durchführen von erhitztem Gas, insbesondere eines Teils oder des gesamten erhitzten ersten Gases, durch die Behandlungskammer (3), wobei das Durchführen durch die Behandlungskammer (4) vor dem Heizen, nach dem Heizen oder gleichzeitig mit dem Heizen der Außenseite (5) erfolgen kann, und
- Trocknen und/oder Rösten des Lebensmittels in der Behandlungskammer (3) durch das Heizen und/oder mittels des durchgeführten erhitzten Gases,
**dadurch gekennzeichnet, dass** an und/oder in der Behandlungskammer (3) ein Sensor, insbesondere ein Feuchtigkeitssensor, angeordnet ist, wobei ein Ermitteln einer Kontrollgrösse, insbesondere der Feuchtigkeit des Lebensmittels, in der Behandlungskammer (3) während des Trocknens und/oder Röstens auf Basis eines Messwerts, insbesondere des Feuchtigkeitssensors, erfolgt, und wobei ein Regeln des Heizens und/oder des Durchführens von erhitztem Gas in Abhängigkeit von der ermittelten Kontrollgröße, insbesondere der Feuchtigkeit, erfolgt.

10. Verfahren nach Anspruch 9, wobei eine Leitvorrichtung derart angeordnet ist, dass in der Behandlungskammer (3) eine inhomogene Wärmeverteilung erreicht wird, wobei das Verfahren ferner den Schritt des Transportierens des Lebensmittels innerhalb der Behandlungskammer (3) von kälteren zu wärmeren Regionen und umgekehrt aufweist.

## Claims

1. A treatment device (2) for drying and/or roasting a food, in particular cocoa beans and/or cocoa kernel parts (1), wherein the treatment device (2) comprises
a housing (16),
a treatment chamber (3) arranged within the housing (16), the treatment chamber (3) being designed in particular as a drum, and
at least one heating device (4) for heating a gas,
**characterized in that**
at least one sensor, in particular a moisture sensor, is arranged on and/or in the treatment chamber (3) for determining a control variable, in particular the moisture of the food in the treatment chamber (3), during drying and/or roasting,
such that drying and/or roasting can be regulated depending on the determined control variable, in particular the moisture, and
the treatment device (2) comprises a guide device, in particular an adjustable guide device, by means of which the heated gas can be guided through the housing (16) via different paths, wherein the guide device comprises guide elements which are located on the outside of the treatment chamber (3), wherein the guide elements can in particular be guide plates or fins which are provided on the outside of the treatment chamber (3), or gas ducts which lead around the treatment chamber (3),
wherein heated gas flows around the treatment chamber (3) through the guide elements.

2. The treatment device (2) according to claim 1, wherein the control variable is the moisture of the food or the food surface, an amount of oxygen, an amount of food material discharged from the treatment chamber or combinations thereof and/or a moisture sensor is arranged on and/or in the treatment chamber (3), which is designed as a microwave sensor (7) and/or at least two lambda probes (6, 13) are arranged in the treatment device (2), wherein a second lambda probe (13) of the two lambda probes is arranged on and/or in the heating device (4) for measuring the oxygen content in the heating device (4).

3. The treatment device (2) according to any one of claims 1 or 2, wherein the housing comprises at least two closable hot gas inlet openings and/or at least two closable hot gas outlet openings.

4. The treatment device (2) according to any one of claims 1 to 3, wherein the sensor is designed as a lambda probe (6) for measuring the oxygen content in the treatment chamber (3), wherein in particular the treatment device (2) comprises a data processing unit (11) in which value pairs of roasting degree and moisture of the food are stored, wherein the roasting degree can be determined by means of a measurement of and in particular the change in the oxygen content in the treatment chamber (3), and wherein the moisture of the food can be determined by means of the measurement of and in particular the change in the oxygen content in the treatment chamber (3) and the stored value pairs.

5. The treatment device (2) according to any one of claims 1 to 4, wherein a volume flow regulating device (8) for the volume flow of heated gas and/or of gas fed into the heating device (4) is arranged in the treatment device (2), wherein the volume flow can be regulated depending on the determined moisture.

6. The treatment device (2) according to any one of claims 1 to 5, wherein the guide device is adjustable such that the gas flows evenly around the treatment chamber (3) and thus a homogeneous heat distribution is achieved.

7. The treatment device (2) according to any one of claims 1 to 5, wherein the guide device is adjustable such that the gas only flows past parts of the treatment chamber (3) and thus an inhomogeneous heat distribution is achieved.

8. The treatment device (2) according to claim 7, further comprising a device for transferring the food from colder to warmer regions of the treatment chamber (3) and vice versa, for example by a screw conveyor, by preferably axially supported stirring or distributing elements or by guide plates.

9. A method for drying and/or roasting a food, in particular cocoa beans and/or cocoa kernel parts (1), in a treatment device (2) according to any one of the preceding claims, comprising a housing (16), a treatment chamber (3), at least one heating device (4) and a guide device, in particular an adjustable guide device, by means of which the heated gas can be guided through the housing (16) via different paths, the method comprising the following steps:
- heating a first gas, in particular clean air, by means of the heating device (4),
- heating, in particular by feeding some or all of the heated gas, an outer side (5) of the treatment chamber (3),
- passing heated gas, in particular some or all of the heated first gas, through the treatment chamber (3), wherein the passing through the treatment chamber (3) can take place prior to the heating, after the heating or simultaneously with the heating of the outer side (5), and
- drying and/or roasting of the food in the treatment chamber (3) by heating and/or by means of the passed-through heated gas,
**characterized in that** a sensor, in particular a moisture sensor, is arranged on and/or in the treatment chamber (3), wherein a control variable, in particular the moisture of the food, in the treatment chamber (3) is determined during drying and/or roasting on the basis of a measured value, in particular of the moisture sensor, and wherein the heating and/or the passing-through of heated gas is/are regulated depending on the determined control variable, in particular the moisture.

10. The method according to claim 9, wherein a guide device is arranged such that an inhomogeneous heat distribution is achieved in the treatment chamber (3), wherein the method further comprises the step of transporting the food within the treatment chamber (3) from colder to warmer regions and vice versa.

## Revendications

1. Dispositif de traitement (2) pour sécher et/ou torréfier un produit alimentaire, en particulier des fèves de cacao et/ou des éclats de fèves de cacao (1), ledit dispositif de traitement (2) comprenant un carter (16),
un compartiment de traitement (3) disposé à l'intérieur du carter (16), le compartiment de traitement (3) étant notamment réalisé sous forme de tambour, et au moins un dispositif de chauffage (4) pour chauffer un gaz, **caractérisé**
**en ce qu'**au moins un capteur, en particulier un capteur d'humidité, est disposé sur et/ou dans le compartiment de traitement (3) pour déterminer une grandeur de contrôle, en particulier l'humidité du produit alimentaire dans le compartiment de traitement (3), pendant le séchage et/ou la torréfaction,
de manière à permettre une régulation du séchage et/ou de la torréfaction en fonction de la grandeur de contrôle, en particulier de l'humidité déterminée, et
**en ce que** le dispositif de traitement (2) présente un dispositif de guidage, en particulier réglable, au moyen duquel le gaz chauffé peut être conduit sur différents trajets dans le carter (16), ledit dispositif de guidage comprenant des éléments de guidage présentés à l'extérieur du compartiment de traitement (3), lesdits éléments de guidage pouvant être en particulier des tôles de guidage ou des lamelles prévues sur le côté extérieur du compartiment de traitement (3), ou des canaux de gaz passant autour du compartiment de traitement (3),
le compartiment de traitement (3) étant enveloppé de gaz chauffé par les éléments de guidage.

2. Dispositif de traitement (2) selon la revendication 1, où la grandeur de contrôle est l'humidité du produit alimentaire ou de la surface du produit alimentaire, une teneur en oxygène, une quantité de matière alimentaire évacuée du compartiment de traitement ou des combinaisons de celles-ci, et/ou où un capteur d'humidité est disposé sur et/ou dans le compartiment de traitement (3), lequel est réalisé comme capteur micro-ondes (7), et/ou au moins deux sondes lambda (6, 13) sont présentes dans le dispositif de traitement (2), la deuxième sonde (13) des deux sondes lambda étant montée contre et/ou dans le dispositif de chauffage (4) pour la mesure de la teneur en oxygène dans le dispositif de chauffage (4).

3. Dispositif de traitement (2) selon la revendication 1 ou la revendication 2, où le carter présente au moins deux ouvertures d'alimentation en gaz chaud obturables et/ou au moins deux ouvertures d'évacuation de gaz chaud obturables.

4. Dispositif de traitement (2) selon l'une des revendications 1 à 3, où le capteur est réalisé est réalisé comme sonde lambda (6) pour la mesure de la teneur en oxygène dans le compartiment de traitement (3), le dispositif de traitement (2) comprenant en particulier une unité de traitement des données (11), où sont mémorisés des couples de valeurs de degré de torréfaction et d'humidité du produit alimentaire, le degré de torréfaction étant déterminable au moyen d'une mesure et en particulier de la variation de la teneur en oxygène dans le compartiment de traitement (3), et la détermination de l'humidité du produit alimentaire pouvant être effectuée par mesure et en particulier par variation de la teneur en oxygène dans le compartiment de traitement (3) et par les couples de valeurs mémorisés.

5. Dispositif de traitement (2) selon l'une des revendications 1 à 4, où un dispositif de régulation de débit volumique (8) est disposé dans le dispositif de traitement (2) pour le débit volumique de gaz chauffé et/ou du gaz conduit vers le dispositif de chauffage (4), le débit volumique pouvant être régulé en fonction de l'humidité déterminée.

6. Dispositif de traitement (2) selon l'une des revendications 1 à 5, où le dispositif de guidage est réglable de sorte que le gaz s'écoule de manière régulière autour du compartiment de traitement (3) et qu'une répartition homogène de la chaleur soit ainsi obtenue.

7. Dispositif de traitement (2) selon l'une des revendications 1 à 5, où le dispositif de guidage est réglable de manière à ce que le gaz ne s'écoule que sur des parties du compartiment de traitement (3) et qu'une répartition inhomogène de la chaleur soit ainsi obtenue.

8. Dispositif de traitement (2) selon la revendication 7, comprenant en outre un dispositif de transfert du produit alimentaire de zones plus froides vers des zones plus chaudes du compartiment de traitement (3) et inversement, par exemple au moyen d'une vis sans fin, d'éléments d'agitation ou de distribution de préférence montés axialement, ou de tôles de guidage.

9. Procédé de séchage et/ou de torréfaction d'un produit alimentaire, en particulier de fèves de cacao et/ou d'éclats de fèves de cacao (1), dans un dispositif de traitement (2) selon l'une des revendications précédentes, comprenant un carter (16), un compartiment de traitement (3), au moins un dispositif de chauffage (4) et un dispositif de guidage, en particulier réglable, au moyen duquel le gaz chauffé peut être conduit sur différents trajets dans le carter (16), ledit procédé comprenant les étapes suivantes :
- chauffage d'un premier gaz, en particulier d'air pur, au moyen du dispositif de chauffage (4),
- chauffage, en particulier par conduction d'une partie du gaz chauffé ou de la totalité de celui-ci, d'un côté extérieur (5) du compartiment de traitement (3),
- passage de gaz chauffé, en particulier d'une partie du premier gaz chauffé ou de la totalité de celui-ci, par le compartiment de traitement (3), le passage par le compartiment de traitement (3) pouvant être effectué avant chauffage, après chauffage ou simultanément au chauffage du côté extérieur (5), et
- séchage et/ou torréfaction du produit alimentaire dans le compartiment de traitement (3), par chauffage et/ou au moyen du gaz chauffé passant,
**caractérisé en ce qu'**un capteur, en particulier un capteur d'humidité, est disposé contre et/ou dans le compartiment de traitement (3), une détermination d'une grandeur de contrôle, en particulier de l'humidité du produit alimentaire, dans le compartiment de traitement (3) pendant le séchage et/ou la torréfaction, est effectuée sur la base d'une valeur de mesure, en particulier du capteur d'humidité, et une régulation du chauffage et/ou du passage de gaz chauffé est effectuée en fonction de la grandeur de contrôle déterminée, en particulier de l'humidité.

10. Procédé selon la revendication 9, où un dispositif de guidage est disposé de sorte qu'une répartition de chaleur non homogène est obtenue dans le compartiment de traitement (3), ledit procédé comprenant en outre l'étape de transport du produit alimentaire à l'intérieur du compartiment de traitement (3) depuis des zones plus froides vers des zones plus chaudes et inversement.
